(19)

Europäisches
Patentamt
European
Patent Office
Office européen
des brevets

(11) **EP 3 042 571 A1**

(12) **EUROPEAN PATENT APPLICATION**

(43) Date of publication:
**13.07.2016 Bulletin 2016/28**

(51) Int Cl.:
*A23J 3/14* (2006.01)  *A23J 3/26* (2006.01)
*A23L 5/00* (2016.01)

(21) Application number: **14198051.6**

(22) Date of filing: **15.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Anabio Technologies Limited
2 Dublin (IE)**

(72) Inventors:
• **BLEIEL, Sinead
Dublin, 2 (IE)**
• **KENT, Robert
Dublin, 2 (IE)**

(74) Representative: **Purdy, Hugh Barry
PurdyLucey
Intellectual Property
6-7 Harcourt Terrace
D2 Dublin (IE)**

(54) **A solution of denatured pea protein, and uses thereof to form microbeads**

(57)    A method of producing a denatured pea protein solution comprises the steps of mixing pea protein with an alkali solvent to provide a 1-10% pea protein solution (w/v) having a pH of at least 10, resting the pea protein solution for at least 15 minutes, heating the pea protein solution under conditions sufficient to heat-denature the pea protein without causing gelation of the pea protein solution, and rapidly cooling the denatured pea protein solution to prevent gelation, wherein at least 90% of the pea protein in the denatured pea protein solution is soluble. Also described is a method of producing microbeads having a denatured pea protein matrix, the method comprising the steps of providing a denatured pea protein solution according to the invention, treating the denatured pea protein solution to form microdroplets; and cross-linking and chelating the droplets to form microbeads.

A

FIG. 3

**Description**

**Introduction**

Animal proteins (whey proteins, gelatin, casein) extracted from animal derived products (milk, collagen) are widely used for encapsulation of active substances. These natural polymers present clear advantages: biocompatibility, biodegradability, good amphiphilic and functional properties such as water solubility, and emulsifying and foaming capacity. However, cost, allergenicity market limitations represent some shortfalls for animal derived proteins. Currently, the widespread presence of microparticles based on animal proteins, contrasts with the very limited use of plant proteins in industry. This tendency should be reversed in coming years. In food applications, plant proteins are known to be less allergenic compared to animal derived proteins. For these reasons, over the past few years, the development of new applications for plant products rich in proteins has become an increasingly interesting area for research. For the last decade, the protein ingredient industry has been turning towards plants as a preferred alternative to animal-based sources, e.g. in vegetarian diets, due to increased consumer concerns over the safety of animal-derived products.

The two techniques mainly used for microencapsulation of active material by vegetable proteins are spray-drying and coacervation. Both processes share the aspect of "green chemistry" with vegetable proteins as renewable and biodegradable resources, plus, the two techniques do not need the use of organic solvents. Other processes such as solvent evaporation techniques can be also considered; however other excipient and polysaccharides need to be introduced to generate a defined structure.

Spray-drying is a continuous process to convert an initial liquid into a solid powder of microparticles. It is a very common dehydration process used to form a continuous matrix surrounding the active substances. This technology offers several advantages: it is simple, relatively inexpensive, rapid and the important factor for successful microencapsulation by spray- drying is a high solubility of shell material in water and a low viscosity at high solid content. Disadvantages of this technique are the loss of a significant amount of product (due to adhesion of the microparticles to the wall of the spray-dryer) and the possibility of degradation of sensitive products at high drying temperatures.

Microencapsulation by coacervation is carried out by precipitation of wall forming materials around the active core under the effect of one of the following factors: change of pH or temperature, addition of a non-solvent or electrolyte compound Coacervation occurs either via a simple or complex method. Simple coacervation involves only one colloidal solute and thus formation of a single polymer envelope. Complex coacervation is generated by mixing two oppositely charged polyelectrolytes in order to allow shell formation around an active core. Ducel *et al.* (2004) examined the use of pea globulin (isoelectric point in a pH range 4.4-4.6) for triglyceride microencapsulation by complex coacervation plus the influence of pH and polymer concentration on the microcapsule size. Increasing pea globulin/ gum arabic (50:50) blend concentration in the initial makeup, resulted in increased microcapsule size. For example, at pH 3.5, microcapsule diameters varied from 28 $\mu$m to 97 $\mu$m with a concentration change of 1 g/L to 10 g/L respectively. Conversely, Lazko et al. (2004a) observed a decrease of coacervate size with an increase of soy protein concentration. In fact, the mean diameter of microparticles obtained, decreased from 153 $\mu$m to 88 $\mu$m as the protein concentration increased from 0.5 g/L to 5 g/L respectively. This discordance between published results was probably due to coacervation process differences. Complex coacervation was used in the case of pea proteins, and particle agglomeration and coalescence increased their size. The presence of polysaccharides in the initial preparation can also influence coacervate agglomeration (Klassen and Nickerson, 2012). On the other hand, simple coacervation was used for preparing soy protein microparticles. Higher concentrations of surface active proteins in the emulsion increased the coalescence resistant of coacervates.

It is an object of the invention to provide a solution of denatured pea protein that is suitable for use in forming microbeads, and a process for the production thereof. It is a further object of the invention to provide a process for forming pea protein microbeads.

**Statements of Invention**

In a first aspect, the invention provides a solution of denatured pea protein having a very high content of soluble pea protein (i.e greater than 90% using the method described below) and which has a sufficiently low viscosity to enable it to be extruded or sprayed through a nozzle during the formation of microbeads. The high content of soluble denatured pea protein provides for an efficient process in which the use of the pea protein substrate is maximised. In addition, a denatured pea protein solution formed according to the method of the invention, and having a pea protein concentration of 6-9% (w/v) has been found to be ideal for producing spherical microbeads by means of cold gelation.

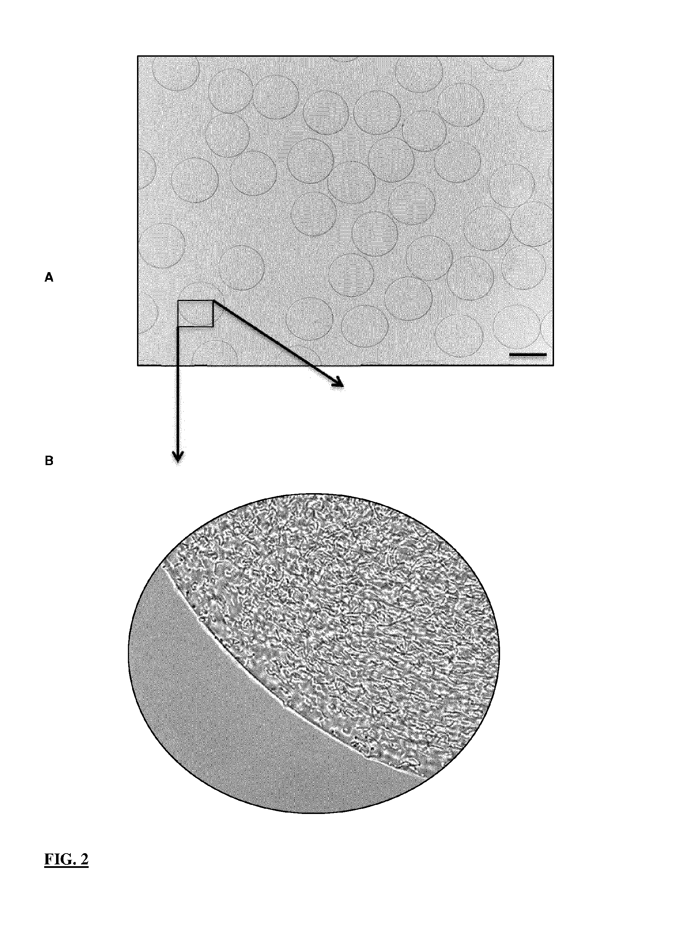

In a second aspect, the invention provides a method for producing pea protein microbeads that are spherical, typically have a homogenous size distribution, and are capable of surviving passage through a mammalian stomach intact and subsequently breaking up in the ileum. This allows the microbeads deliver acid-sensitive active agents to the ileum without damage. Moreover, the spherical shape of the microbeads and the homogenous size distribution allows for controlled and repeatable active agent release kinetics. The method for the production of the microbeads involves forming droplets of the denatured pea protein solution of the invention, and then cold gelation of the droplets in an acidic bath. Surprisingly, the Applicant has discovered that use of an acidic gelling bath having a pH that is the same as the pI of the pea protein results in irregularly shaped microbeads, and that to achieve highly spherical microbeads (such as those shown in Fig. 2) requires that the pH of the gelling bath is less than the pI of the pea protein.

In a first aspect, the invention provides a method of producing a denatured pea protein solution comprising the steps of:

mixing pea protein with an alkali solvent to provide a 1-10% pea protein solution (w/v) having a pH of at least 10;
resting the pea protein solution for at least 15 minutes;
heating the pea protein solution under conditions sufficient to heat-denature the pea protein without causing gelation of the pea protein solution; and
rapidly cooling the denatured pea protein solution to prevent gelation;

wherein at least 90% of the pea protein in the denatured pea protein solution is soluble.

Typically, the pea protein is mixed with an alkali solvent to provide a 6-9% pea protein solution (w/v) having a pH of at least 10.

Preferably, the pea protein is mixed with an alkali solvent to provide a pea protein solution having a pH of 10.5 to 11.

Typically, the cooled denatured pea protein solution is clarified to remove insoluble matter. Various methods of clarification will be apparent to a person skilled in the art. Preferably, the solution is clarified by centrifugation.

Typically, the pea protein solution is rested for at least 30 minutes. Ideally, the pea protein solution is rested for at least 40 minutes. In one embodiment, the pea protein solution is rested for at least 45, 50, 60, 70, 80, 90, 100, 110, 120 minutes.

In a further aspect, the invention provides a denatured pea protein solution comprising 1-10% denatured pea protein (w/v) in an alkali solvent, the solution having a pH of at least 10, and in which at least 90% of the pea protein in the denatured pea protein solution is soluble.

Preferably, the denatured pea protein solution comprises 6-9% denatured pea protein (w/v). Ideally, the denatured pea protein solution comprises 6.5-8.5% denatured pea protein (w/v).

Preferably, at least 95% of the pea protein in the denatured pea protein solution is soluble.

In a further aspect, the invention provides a method of producing microbeads having a denatured pea protein matrix, the method comprising the steps of:

providing a;
treating a denatured pea protein solution according to the invention or formed according to a method of the invention to form droplets; and
cross-linking (and optionally) chelating the droplets to form microbeads.

Preferably, the step of cross-linking and chelating the droplets comprises immediately gelling the droplets in an acidic gelling bath having a pH that is less than the pI of the pea protein to form microbeads.

Suitably, the step of treating the denatured pea protein solution to form droplets comprises the step of extruding the solution through a nozzle assembly to form droplets.

In one embodiment, an active agent is added to the denatured pea protein solution prior to the droplet forming step, and optionally after the heating step, wherein the nozzle assembly comprises a single nozzle, and wherein the microbeads are microparticles having a continuous denatured pea protein matrix with active agent distributed throughout the denatured pea protein matrix. Preferably, the nozzle is heated.

In another embodiment, the nozzle assembly comprises an outer nozzle disposed concentrically around an inner nozzle, in which the denatured pea protein is extruded through the outer nozzle and an active agent solution comprising active agent is extruded through the inner nozzle, and wherein the microbeads are microcapsules having a denatured pea protein shell and a core comprising active agent.

Typically, the nozzle assembly comprises an electrostatic voltage system configured to apply an electrical potential between the nozzle and an electrode disposed beneath the nozzle.

In a preferred embodiment, the invention provides a method of producing microbeads, typically spherical microbeads, and ideally spherical microbeads having a homogenous size distribution, having a denatured pea protein matrix, the method comprising the steps of:

providing a 6-9% denatured pea protein solution according to invention;
extruding the solution through a nozzle assembly to form droplets.; and
immediately gelling the droplets in an acidic gelling bath having a pH that is less than the pI of the pea protein to form spherical microbeads.

## Brief Description of the Figures

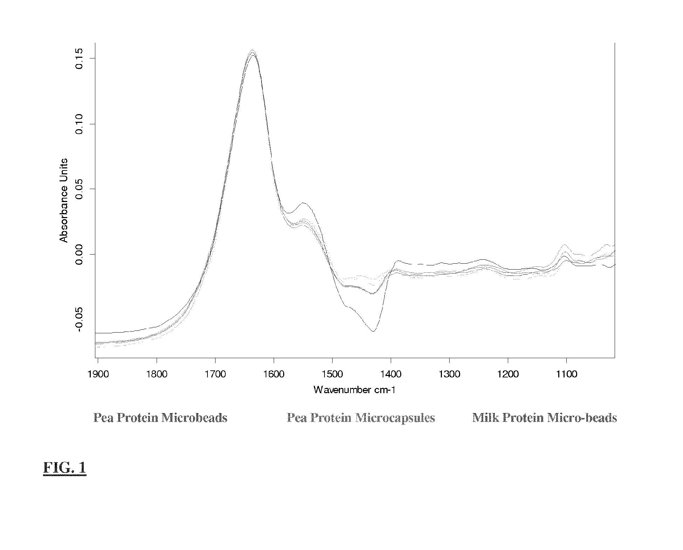

**Fig. 1**: Infrared spectra pea protein microbeads and capsules.

**Fig. 2:** Light Microscopy Image of Pea Protein microbeads after encapsulation (A) and in the presence of encapsulated probiotic cultures (B). Bar represents 200 microns.

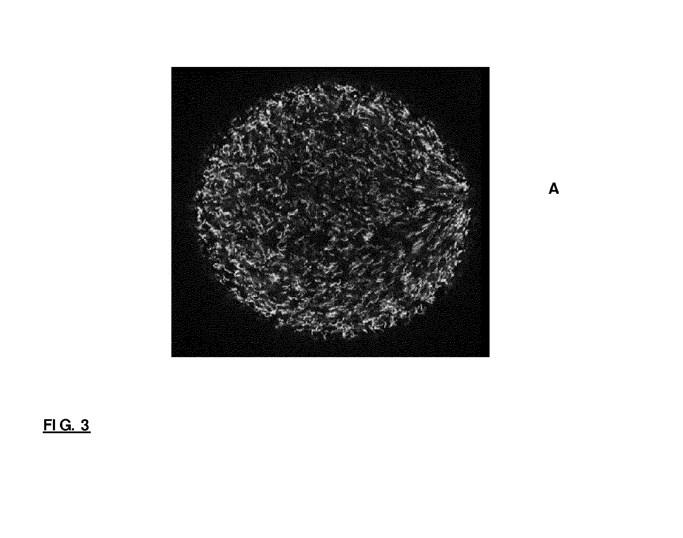

**Fig. 3:** Confocal Microscope image of Pea protein microbead using BACLight Confocal staining. Green fluorescence indicates live probiotics and red fluorescence indicates dead probiotics.

**Fig. 4:** Atomic Force Microscope image of the surface of a protein microbead (A) and microcapsule.

**Fig. 5:** Light microscope illustration of *in vitro* gastro-intestinal delivery of pea protein micro-beads. Images illustrate (A) stomach incubation after 30 min at pH 1.6; (B) stomach incubation after 180 min at pH 1.6; Figure C illustrates micro-bead digestion after 5 minutes intestinal incubation (pH 7.2).

**Fig. 6:** Tensile strength of pea protein micro-beads during *in vitro* stomach incubation.

**Fig. 7:** Visualisation of progressive dissolution of pea protein microbeads during *ex vivo* gastro-intestinal incubation. Size exclusion HPLC measured protein/peptide release from micro-capsules (B) after 5 min (black line) and 30 min (red line) of intestinal incubation. The standard curve of protein/peptide standards ( ♦ ) indicated the molecular weights of typical peptide expected to be found in intestinal samples.

**Fig. 8**:_Efficiency of encapsulation of a bacterial strain in 8 % (w/v) commercial pea protein isolate microbeads. Pea protein suspension represents free cells in the presence of commercial pea protein isolate. Pea protein microbeads represents levels of viable cells detected following microencapsulation of the pea protein suspension, and washing (in water).

**Fig. 9:** Survival of free bacterial cells in water, encapsulated bacterial cells within 8 % (w/v) commercial pea protein isolate microbeads and free bacterial cells in an 8 % (w/v) commercial pea protein isolate suspension. Each sample was separately added to water maintained at ~85°C and held for 90 seconds prior to cooling on ice. Cell viability was analysed using the plate count method.

**Fig. 10:** Illustrates the presence of pea protein capsules in the stomach of human candidates.

**Fig. 11:** Release of peptide & Free Amino Acids in Jejunum during *in vivo* Gastro-intestinal Transit of pea protein microcapsule.

**Fig.12A:** illustrates the presence of intact protein (blue line) and peptide release Black line as measured by size exclusion HPLC within the jejunum and ileum of human candidates Trace amounts of peptides identified in the intestinal digesta at T =10 min are represented by the red baseline.

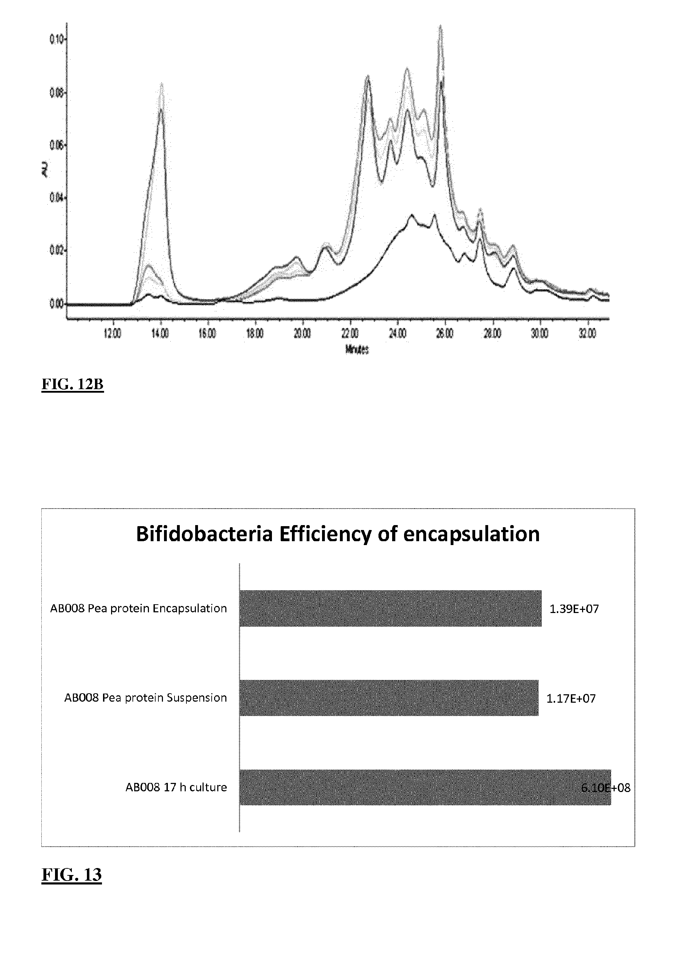

**Fig.12B:** illustrates the presence of intact protein (initial first peak) and peptide release subsequent various peaks) as measured by gel permeation chromatography within the jejunum and ileum of all four human candidates. Trace amounts of peptides identified in the intestinal digesta at T =10 min we eliminated by baseline measurements.

**Fig. 13:** Comparison of viable bifidobacteria cells detected following microencapsulation in pea protein according to a method of the invention

## Detailed Description of the Invention

Definitions

"Pea protein" should be understood to mean protein obtained from pea, typically total pea protein. Preferably the pea protein is pea protein isolate (PPI), pea protein concentrate (PPC), or a combination of either.

"Alkali solvent" means an aqueous solution of a suitable base for example NaOH or KOH. Preferably, the alkali solvent comprises an aqueous solution of 0.05-0.2M base, more preferably 0.05-0.15. Ideally, the alkali solvent comprises an aqueous solution of 0.075-0.125 M base. Typically, the alkali solvent is an aqueous solution of NaOH, for example 0.05-0.2M NaOH. Preferably, the alkali solvent comprises an aqueous solution of 0.05-0.2M NaOH or KOH, more preferably 0.05-0.15 NaOH or KOH. Ideally, the alkali solvent comprises an aqueous solution of 0.075-0.125 M NaOH or KOH.

"pH of at least 10" means a pH of greater than 10, typically a pH of 10-13 or 10-12. Ideally, the pea protein solution is 10.5 to 11.

"Pea protein solution" means a liquid pea protein composition comprising soluble pea protein and optionally insoluble pea protein. The methods of the invention provide for pea protein solutions comprising high levels of soluble pea protein, typically greater than 90%, or 95% (for example, 95-98% soluble pea protein). When the pea protein is mixed with alkali solvent, the amount of soluble pea protein will gradually increase during the resting step until high levels of the pea protein is solubilised in the alkali solvent, at which point the pea protein solution is heat-denatured. This results in a solution of denatured pea protein having very high levels of denatured pea protein present in the form of soluble denatured pea protein aggregates.

The term "soluble" or "solubilised" as applied to pea protein (or denatured pea protein) should be understood to mean that the pea protein is present as an insoluble pea protein aggregate. Typically, the terms mean that the soluble aggregates will not come out of solution upon centrifugation at 10,000 $\times g$ for 30 minutes at 4°C.

"Resting the pea protein solution" means leaving the pea protein solution rest for a period of time to allow the pea protein solubilise in the alkali solvent. Generally, the pea protein solution is allowed to rest for at least 20, 25, 30, 35, 40, or 45 minutes. Typically, the pea protein solution is rested at room temperature. Typically, the pea protein solution is rested for a period of time until at least 90% of the pea protein has been solubilised.

"Conditions sufficient to heat-denature the pea protein without causing gelation of the pea protein solution" means a temperature and time treatment that denatures at least 95% or 99% of the pea protein present in the solution while maintaining the solution in a form suitable for extrusion (i.e. readily flowable with suitable viscosity). The temperature and times employed may be varied depending on the concentration of the pea protein solution. Thus, for example, when an 8% pea protein solution (w/v) is used, the solution may be treated at a temperature of 80-90°C for 20-30 minutes (or preferably 85°C for 25 minutes). However, it will be appreciated that higher temperatures and shorter times may also be employed.

"Rapidly cooling the denatured pea protein solution" means actively cooling the solution to accelerate cooling compared with simply allowing the solution to cool at room temperature which the Applicant has discovered causes the solution to gel. Rapid cooling can be achieved by placing the solution in a fridge or freezer, or on slushed ice, until the temperature of the solution has been reduced to at least room temperature.

"At least 90% (w/w) of the pea protein in the denatured pea protein solution is soluble" means that at least 90% by weight of the total pea protein in the solution is in a solubilised form. Preferably at least 95% (w/w), and ideally from 95% to 98% of the pea protein is solubilised. The method of measuring solubility is the shake flask method described below.

"Treated to remove soluble matter" means a separation or clarification step to remove soluble matter such as insoluble pea protein from the pea protein solution. In the specific embodiments described herein, centrifugation is employed (10,000 $\times g$ for 30 minutes at 4°C) is employed, but other methods will be apparent to the skilled person such as, for example, filtration or the like.

"Solution of denatured pea protein" means a solution of pea protein in which at least 90%, 95% or 99% of the total pea protein is denatured. A method of determining the % of denatured pea protein in a pea protein solution is provided below.

"Treating a denatured pea protein solution to form droplets" typically means passing the solution through a small orifice whereby the solution is broken up into micro-size droplets. Preferably, the solution is extruded through an orifice. Various methods will be apparent to the skilled person for generating droplets, for example prilling and spraying. A preferred method of producing the microbeads is a vibrating nozzle technique, in which the suspension is sprayed (extruded) through a nozzle and laminar break-up of the sprayed jet is induced by applying a sinusoidal frequency with defined amplitude to the spray from the nozzle. Examples of vibrating nozzle machines are the Encapsulator (Inotech, Switzerland) and a machine produced by Nisco Engineering AG, or equivalent scale-up version such as those produced by Brace GmbH. Typically, the spray nozzle has an aperture of between 50 and 600 microns, preferably between 50 and 200 microns, suitably 50-200 microns, typically 50-150 micronsmicrons, and ideally about 80 - 150 microns. Suitably, the frequency of operation of the vibrating nozzle is from 900 to 3000 Hz. Generally, the electrostatic potential between nozzle and acidification bath is 0.85 to 1.3 V. Suitably, the amplitude is from 4.7kV to 7kV. Typically, the falling distance (from the nozzle to the acidification bath) is less than 50cm, preferably less than 40cm, suitably between 20 and 40cm, preferably between 25 and 35cm, and ideally about 30cm. The flow rate of suspension (passing through the nozzle) is typically from 3.0 to 10 ml/min; an ideal flow rate is dependent upon the nozzle size utilized within the process.

"Immediately gelling the droplets in an acidic gelling bath to form microbeads" means that the droplets gel instantaneously upon immersion in the acidic bath. This is important as it ensures that the droplets have a spherical shape and homogenous size distribution. Surprisingly, instantaneous gelation is achieved by employing an acidic bath having a pH less than the pI of the pea protein, for example a pH of 3.8 to 4.2.

"Acidic gelling bath" means a bath having a pH below the pI of the pea protein that is capable of instantaneously gelling the droplets. Typically, the acidic gelling bath has a pH of less than 4.3, for example 3.5 to 4.2, 3.7 to 4.2, or 4.0 to 4.2. The acidic gelling bath is generally formed from an organic acid. Ideally, the acid is citric acid. Typically, the acidic gelling bath has an acid concentration of 0.1M to 1.0M, preferably 0.3M to 0.7M, and more preferably 0.4M to 0.6M. Typically, the acidic gelling bath has a citric acid concentration of 0.1M to 1.0M, preferably 0.3M to 0.7M, and more preferably 0.4M to 0.6M. Preferably, the acidic gelling bath comprises 0.4 to 0.6M citric acid and has a pH of less than 4.3, typically 4.0 to 4.2.

"Microbeads" should be understood to mean generally spherical particles comprising gelled denatured pea protein and having an average diameter of 50 to 500 microns as determined using the light microscopy method described below. Preferably the microbeads have an average diameter of 50-200 microns as determined using the light microscopy method described below. Preferably the microbeads have an average diameter of 80-200 microns as determined using the light microscopy method described below. Preferably the microbeads have an average diameter of 80-150 microns as determined using the light microscopy method described below. Depending on the method of manufacture, the microbeads may be microparticles or microcapsules.

"Microparticles" means micro-sized particles that are generally spherical and have a continuous denatured pea protein matrix, and optionally an active agent dispersed throughout the pea protein matrix.

"Microcapsules" means micro-sized particles that are generally spherical and have a shell formed of gelled denatured pea protein and core within the shell. The core may be a liquid or a solid, or indeed a gas. In one embodiment, the core comprises native protein, for example native pea protein.

"Active agent" means any component suitable for delivery to the mammalian ileum, but typically means a component that is sensitive to an external condition for example heat, pH, pressure, chemical stress or enzymes. Thus, the active component may be sensitive to pH, enzymes (i.e. protease enzymes), high pressure, high shear, and temperature abuse during storage. In one particularly preferred embodiment of the invention, the active component is a cell, typically a bacterial cell, and ideally a probiotic cell. Such cells are sensitive to low pH conditions, such as would be encountered in the stomach, and as such need to be shielded from gastric pH and bile salt environments. Probiotic bacteria, and indeed other types of cells, are also sensitive to high shear or high pressure, such as are employed in conventional methods of generating micron-sized polymer beads. Other types of active components which may be encapsulated in the microbeads of the invention include micronutrients, vitamins, minerals, enzymes, starter bacteria, cell extracts, proteins and polypeptides (native or denatured), sugars and sugar derivatives, nucleic acids and nucleic acid constructs, pharmaceutically-active agents, imaging dyes and ligands, antibodies and antibody fragments, phytochemicals and the like.

"Active agent solution" means an active agent contained within a suitable liquid carrier in the form of a solution, dispersion or suspension.

"Nozzle assembly" means an apparatus comprising at least one nozzle that is configured for extruding the pea protein solution through the at least one nozzle. In one embodiment, nozzle assembly comprises a single nozzle, whereby a mixture of active agent and pea protein solution may be extruded the single nozzle to form droplets which when gelled form microparticles. In another embodiment, the nozzle assembly comprises an outer nozzle concentrically arranged around an inner nozzle, and in which the pea protein solution is extruded through the outer nozzle and an active agent solution/suspension/dispersion is extruded through the inner nozzle to droplets which when gelled form microencapsulates with a gelled pea protein shell and an active agent containing core.

"Cured in the acidic gelling bath" means that the microbeads are allowed to remain in the gelling bath for a period of time sufficient to cure (harden) the microbeads. The period of time varies depending on the microbeads, but typically a curing time of at least 30 minutes is employed.

Example 1

*Microbeadproduction (Englobbing)*

PURPOSE: For delivery of bioactives to proximal ileum for thermal protection against environmental processing conditions and gastric delivery
Prepare pea protein solution in aqueous 0.1 M NaOH to a concentration of 8% w/v (i.e 8g/ 100ml)
Ensure that the pH is in the 10.5-11.0 range

Place the solution into storage for 45 min at room temperature until the protein is fully solubilised

Adjust to pH 10 using HCl or NaOH / KOH as required

Heat-treat the solution to a temperature of 85°C and maintain that temperature for a duration of 25 min.

After heating cool immediately on slushed ice for 30-45 minutes

Centrifuge the cooled solution at 10,000 *x g* for 30 minutes at 4°C

Prior to extrusion, PPI can be combined with active components i.e. probiotics, colours, etc. The dispersion of PPI / dispersion of PPI + active component will be extruded through an orifice for free-fall into polymerisation bath

The polymerisation bath is composed of Citric Acid (0.5M), NaCl (0.3M), (0.4M) and polysorbate 80 (0.01%)

Optimise the amplitude, and adjust the magnitude of positive charge generate a steady stream of free-falling microdroplets. The polymerisation bath is tempered at 37 Degree Celsius with a free fall distance of 16 cm from the orifice and an agitation velocity of 90 rpm to allow for instantaneous polymerisation of PPI / PPI + active component

Allow the microspheres to cure in the polymerisation buffer at low agitation speed for 2 hour at room temperature

Example 2

*Capsule production*

PURPOSE: Delivery of native pea protein to the proximal ileum for the stimulatory release of satiety hormones GLP-1 and for appetite suppression

Mono-disperse and mono-nuclear microcapsules were prepared using the co-extrusion laminar jet break-up technique. The encapsulator was fitted with one of two different sized concentric nozzles (internal and external)

Heat-treated pea protein (7% w/v) was prepared as outlined above (same material as used for englobbing technique

Heat treated protein is supplied to the external nozzle using an air pressure regulation system which enabled flow rates of 1-3 L/min to be generated using a maximum head pressure of 0.5-0.8 bar

The desired flow rate was set using a pressure reduction valve. The internal phase (native pea protein, non-heat treated) was supplied using a precision syringe pump connected to the inner nozzle to supply the inner phase at flow rates of between 5 and 15 L/min

If bioactive are added, they will be incorporated into the inner core

Spherical microcapsules were obtained by the application of a set vibrational frequency, with defined amplitude, to the co-extruded liquid jet consisting of denatured pea protein and the core native protein

The material in the inner and outer nozzle are both heated to 40 Degrees in order to allow for better flowability in commercial operations

The resulting concentric jet broke up into microcapsules which fell into a magnetically stirred gelling bath 20 cm below the nozzle

The gelling bath consisted of 36 g/l citric acid, 10 mM MOPS, pH 4.0

Tween 80 is added (0.1-0.2% (v/v)) to reduce the surface tension of the gelation solution

To prevent coalescence of the microcapsules during jet break-up and/or when entering the gelling bath, a high negative charge was induced onto their surface using an electrostatic voltage system which applied an electrical potential of 0-2.15 kV between the nozzle and an electrode, placed directly underneath the nozzle

As microcapsules fell through the electrode, they were deflected from their vertical position resulting in their impact occurring over a larger area in the gelation solution

Microcapsules were allowed to harden for at least 30 min to ensure complete gelation and were then washed and filtered using a porous mesh to remove any un-reacted components

Characterisation of Microbeads / Microcapsules of Examples 1 and 2

*Size distribution analysis.*

The mean size distribution of pea protein capsules and microbeads was validated to ensure reproducibility of the production process. D (v, 0.9) (size at which the cumulative volume reaches 90% of the total volume), of encapsulated batches were determined using a laser diffractometer with a range of 0.2-200 $\mu$m. For particle size analysis, batches were resuspended in Milli-Q water and size distribution was calculated based on the light intensity distribution data of scattered light.

*Protein Content:*

The protein- (nitrogen $\times$ 6.25) was determined using standard methods (AOAC, 1990). Protein isolates (200 mg) were suspended in 20 ml deionized water and the pH of the suspensions were adjusted between 2.0 and 9.0 using 0.1 N HCl or NaOH solutions. These suspensions were magnetically stirred for 1 h; pH was checked and adjusted if required, then centrifuged at 8,000 $\times$ g for 10 min. The protein content (N $\times$ 6.25) of supernatant was calculated by estimating nitrogen content (Kjeldahl method).

*Zeta Potential $\zeta$ and Surface Hydrophobicity ($H_0$)*

Zeta Potential $\zeta$ and Surface Hydrophobicity (Ho) was determined for the pea protein microbead and microcapsules. The zeta potential ($\zeta$) of the protein isolates was measured using Zetasizer Nano ZS (Malvern Instrument Ltd., UK). Freshly prepared protein microbeads and microcapsules were suspended in de-ionized water prior to analysis. Surface hydrophobicity (Ho) pea protein micro-beads / microcapsules were estimated using ANS-hydrophobic probe following the method of Kato and Nakai, 1980 (Hydrophobicity determined by fluorescence prose method and its correlation with surface properties of proteins, Biochim Biophys Acta. 1980 Jul 24;624(1):13-20). The encapsulation dispersions were incubated in dark for 15 min and fluorescence intensity (FI) was measured at excitation and emission wavelengths of 390 and 470 nm, respectively using Photoluminescence/Fluorescence spectrometer. FI of ANS-blank and diluted protein solutions without ANS were also measured and subtracted from the FI of the encapsulated protein dispersions with ANS. The initial slope of the plot of the corrected FI versus protein concentration was calculated by linear regression analysis and used as an index of protein Ho. The results are shown in Table 1 below:

TABLE 1

| Format | Protein Content (%) | Zeta Potential $\xi$ (mV) | Surface Hydrophobicity ($H_0$) |
|---|---|---|---|
| **Micro-beads** | 94.35% $\pm$ 0.34% | -48.32 mV $\pm$ 2.31 mV | 587 $\pm$ 21.23 |
| **Micro-capsules** | 94.08% $\pm$ 0.21% | -41.32 mV $\pm$ 1.92 mV | 522 $\pm$ 19.62 |

*FTIR*

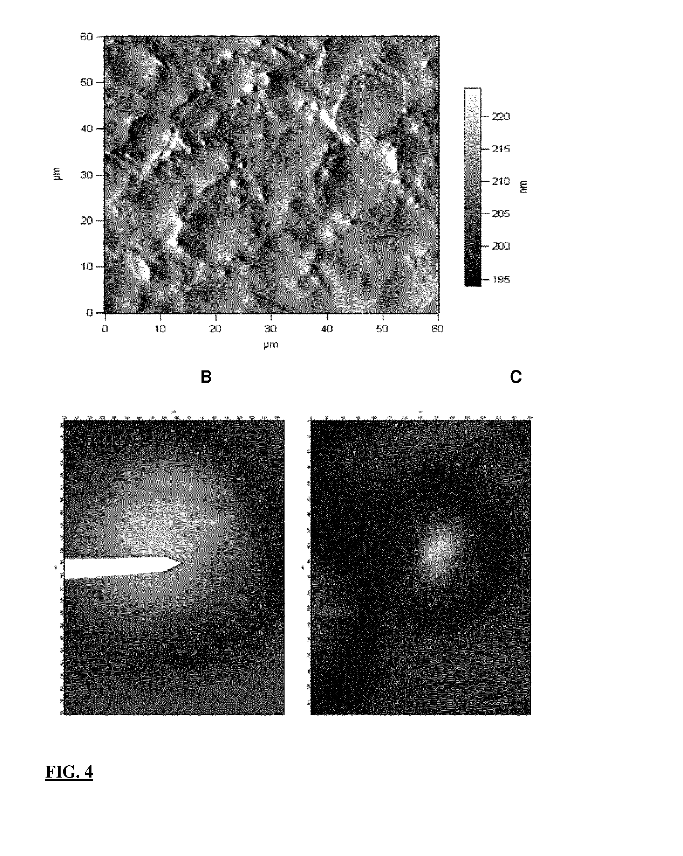

Infrared spectra pea protein microbeads and microcapsules were recorded using FTIR spectrometer (Vertex 70, Bruker Optics Inc., Germany) equipped with Attenuated Total Reflectance (ATR) cell (PIKE Technology Inc., USA). Protein micro-capsules/ micro beads were stored in desiccators over $P_2O_5$ for more than two week in order to remove moisture. The moisture-free isolates were placed on the ATR crystal and pressed down to ensure good contact. The spectrometer was continuously purged with dry air. The spectra in the range of 4000-600 cm$^{-1}$ were recorded (average of 120 spectra at 4 cm$^{-1}$ resolution) and referenced against that of an empty cell. The spectra were subjected to Fourier self-deconvolution (FSD), second derivative (SD) analysis and curve fitting procedures to locate overlapping peaks in amide-I (1700-1600 cm$^{-1}$) region. Figure 4 below illustrates the contrast in secondary structure of microbeads and micro capsules made from pea protein. The graph also illustrates the difference between milk protein micro-beads relative to those composed of pea protein. Hence the secondary structure is different and the polymerization of the material will also be different during encapsulation.

*Microscopy*

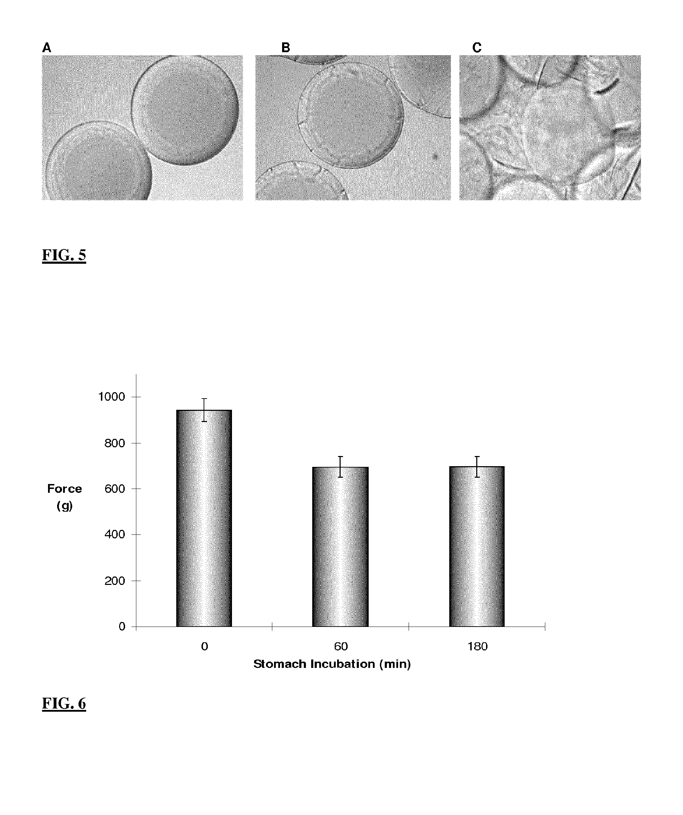

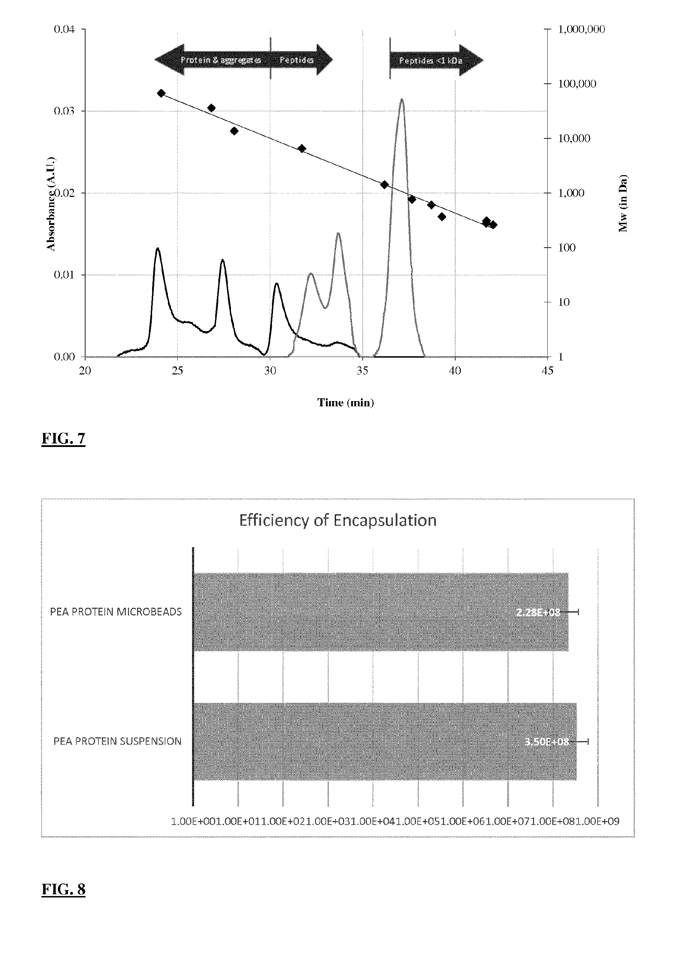

In addition to light microscopy, further image analysis was performed using a Leica TCS SP5 confocal scanning laser microscope (CSLM) for the purpose of micro-particle morphology assessment. Figure 5 illustrates the homogenous size distribution of pea protein microcapsules (average diameter 150 microns). Figure 5b further shows the encapsulation of probiotics in a pea protein microbead with preferable cell distribution throughout the entire microbead. Confocal was also utilised to demonstrate the even distribution of bioactive material i.e. *Lacotbacillus rhamnosus GG*) within a microcapsule after the production process. Figure 6 demonstrates that the process of microencapsulation is not detrimental to the survival of probiotics.
Confocal analysis was conducted by illumination using an argon laser (488 nm laser excitation) and red-green-blue images (24 bit), 512 by 512 pixels, were acquired using a zoom factor of 2.0, giving a final pixel resolution of 0.2 $\mu$m /pixel.
Atomic force microscopy (AFM; Asylum Research MFP-3D-AFM) and Scanning Electron Microscopy (SEM) were also utilised to investigate the significance and magnitude of electrostatic interactions between probiotics and pea protein during encapsulation. Figure 7 illustrates the surface topography of a pea protein micro-bead (Fig. 7A) and a pea protein microcapsule (Fig.7B). It is clear that the surface of a microbead has more cervices and possible pores relative to the surface of a micro-capsule. Hence, the pea protein capsule will potentially have a great ability to resist diffusion and mass transfer effects i.e. water uptake. Micorcapsules also illustrates the ability to protect krill oil and fatty acids (DHA and ARA) against oxidation

*Method of determining solubility of pea protein solution*

A standard technique to determine the thermodynamic aqueous compound solubility is the shake flask method. Solubility studies of pea protein were determined by equilibrating excess amount of pea protein in buffer solutions of pH 1.2, 4.5, 6.8, 7.5 and purified water. Assays were performed in plastic flasks with a capacity of 50 mL. In each flask were added 10 mL of media/ water and the respective amount of pea protein separately. The amount was sufficient to saturate each media, which was characterised by depositing of substance not solubilised. An incubator shaker was used to maintain samples at 37 °C during the test with agitation at 150 rpm for 72 hours (until an equilibrium condition was achieved). After this period, samples were immediately filtered (0.45 $\mu$m) and diluted in a volumetric flask with the corresponding media. For quantification of pea protein, a UV-Vis spectrophotometer (Varian) was used at 214nm and 280nm absorbance wavelength for each media. Solubility values were calculated using calibration curves pre-determined for soluble protein sources.

With solubility results, the dose:solubility ratio was calculated, which is obtained by dividing the commercially acceptable dose of the pea protein (in milligrams) by the solubility (in milligrams per millilitre) obtained in the tests. The values of the dose:solubility ratio are then compared with the criteria established by the ingredient manufacturer guidance to verify if the protein is highly soluble or not.

*Method of determining % of denatured pea protein*

Evaluation of pea protein denaturation involves three essential analysis steps:

- Determination of Pea Protein Concentration
- Preparation of reaction equation
- Electrophoresis, turbidity & agglomerate measurement

*i) Determination of Pea Protein Concentration*

The pea protein concentration was determined by reverse phase HPLC using a Source™ 5RPC column (Amersham Biosciences UK limited). The HPLC system consisted of a Waters 2695 separation module with a Waters 2487 dual wavelength absorbance detector.

*Preparation of Reaction Equation*

The denaturation kinetics of pea protein was determined according to the following equation:

$$dC/dt - kC^n$$

where k is the reaction rate, n is the reaction order and C the concentration of native pea protein.

This equation can be integrated to give

$$(C_t/C_0)^{1-n} = 1+(n-1)kt \ \ (for \ n>1)$$

Where Ct , is the native pea protein concentration at time t, Co is the initial pea protein concentration.

Further rearranging gives,

$$C_t/C_0 = [1+(n-1)kt]^{1/1-n}$$

The natural log of this equation was taken,

$$\ln(C_t/ C_0) = [1/(1-n)]\ln[1+(n-1)kt]. \quad \text{(Equation 1)}$$

Logging decay data such as this equalises the data per unit time and reduces error when solving the equations. The reaction orders and rates were determined by fitting the experimental data to Equation 1. All experimental points were included in the curve fit; this is reasonable considering the rapid heating-up time of the protein solution. Introducing a lag-time to the data did not significantly alter the results obtained. The data were also fitted to the first order decay equation,

$$\ln(C_t/ C_0) = -kt \quad \text{(Equation 2)}$$

to rule out the possibility of first order kinetics.

*iii) HPLC analysis*

High pressure size exclusion chromatography was used to study the disulphide linked aggregates. The aggregates formed during the heating stage were treated with a buffer comprising of 20mM Bis-tris pH 7.0, 5% SDS and 50mM iodoacetamide (IAA). The treated aggregates were stirred overnight at room temperature and filtered through a 0.45$\mu$m syringe filter prior to analysis. An ÄKTA Purifier chromatography system (Amersham Bioscience UK limited) with a TSK G2000 and a TSK G3000 columns (TosoHaas, Montogomeryville, PA. USA) in series were used for the separation. The eluent was 20mM sodium phosphate buffer at pH 7.0 containing 1% SDS. A dye, blue dextran 2000, was used to determine the void volume of columns. Determination of free-amine ($NH_2$) groups was determined via the 2,4,6-trinitrobenzene 1-sulfonic acid (TNBS) methodology of Adler-Nissen, 1979 (Determination of the degree of hydrolysis of food protein hydrolysates by trinitrobenzenesulfonic acid, J. Adler-Nissen J. Agric. Food Chem., 1979, 27 (6), 1256-1262).

*iv) Electrophoresis, turbidity* & *agglomerate measurement*

Two-dimensional electrophoresis was performed according to previously described methods *(*Laemmli U.K. (1970). Cleavage of structural proteins during the assembly of the head of bacteriophage T4. Nature 227(5259): 680-5.*).* The running buffer used was free from $\beta$-mercaptoethanol due the disassociating effect it has on the protein. This caused the break-up of protein aggregates by reducing intra- and intermolecular disulphide bonds. The gel strip was placed on top of a separating gel consisting of 12% acrylamide and a 4% stacking gel, both containing 0.1% SDS. The electrophoresis was carried out using a constant voltage of 155V in a Mini Protean II system (Bio-Rad, Alpha Technologies, Dublin, Ireland). The gels were stained in a 0.5% Coomassie brilliant blue R-250, 25% isopropanol, 10% acetic acid solution. The turbidity of the denatured pea protein solutions were measured using a Varian Caryl UV/visible spectrophotometer (JVA Analytical, Dublin, Ireland) at a wavelength of 590nm. As the size and/or number of the aggregates increased, more light was scattered leading to an increase in the apparent absorbance of the solutions; hence correlated with the denaturation kinetics. Dynamic light scattering (Malvern Zetamaster; model 7EM; Malvern Instruments Ltd, Worcester, UK) was also used to measure the sizes of the aggregates formed during the heating step of pea protein. The scattered light was detected at a fixed angle of 90°. The cumulative method was used to find the mean average (z-average) or the size of a particle that corresponded to the mean of the intensity distribution.

<u>Ex Vivo Gastro-intestinal Resistance / Stability</u>

In order to determine the efficiency of pea protein microbeads / microcapsules as a delivery vehicle, it is important to elucidate their resistance to gastric conditions and subsequent digestion in intestinal conditions. In order to evaluate these conditions gastrointestinal studies were conducted using stomach and intestinal contents obtained from slaughtered pigs *(ex vivo* conditions.) Stomach conditions were pH 1.6 and pepsin enzyme activity was measured (44.46 $\pm$ 2.34 umol Tyrosine equivalents). Intestinal contents were obtained from the proximal ileum and enzyme activity was further investigated. Trypsin activity was measured at 21.39 umol $\pm$ 2.13 and chymotrypsin activity was measured at 319.43 $\pm$ 23.85 umol.

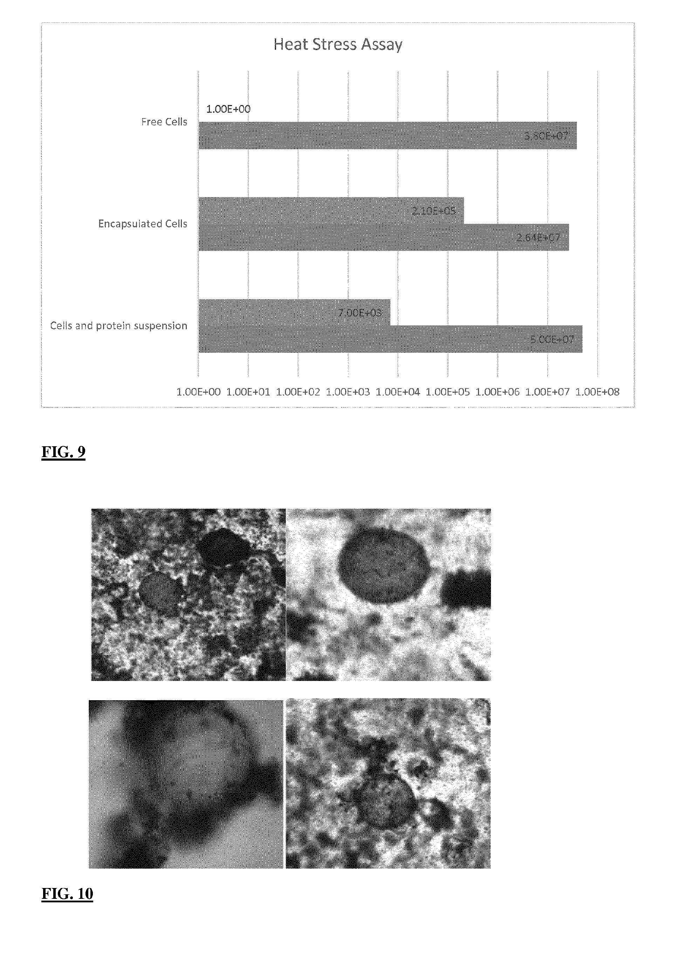

Figure 8 illustrates the acid stability of pea protein micro-beads / microcapsules during *ex vivo* porcine stomach digestion during 3 hours incubation. The microbeads / microcapsules remain robust and after 3 hours the surface begins to shrink, possibly in response to an acid gradient between the core of the bead and the external environment. Fig.8A and 8B show the visual change in the microbead appearance during 3-hour incubation; however the structure remains intact. Fig 8C illustrates the digestion of these microbeads during intestinal incubation in the presence of trypsin, chymotrypsin and other typical intestinal enzymes. The strength of the micro - beads during stomach incubation is shown in Fig. 10 and illustrates that microbead strength decreases during stomach incubation; however, the overall strength of the micro-bead remains relatively high (632.32g $\pm$ 24.32g). Intestinal digestion of the pea protein microbeads is visualized in Fig. 10 where the Gel permeation chromatography screens for peptide release.

*Probiotic Encapsulation in Pea Protein Micro beads*

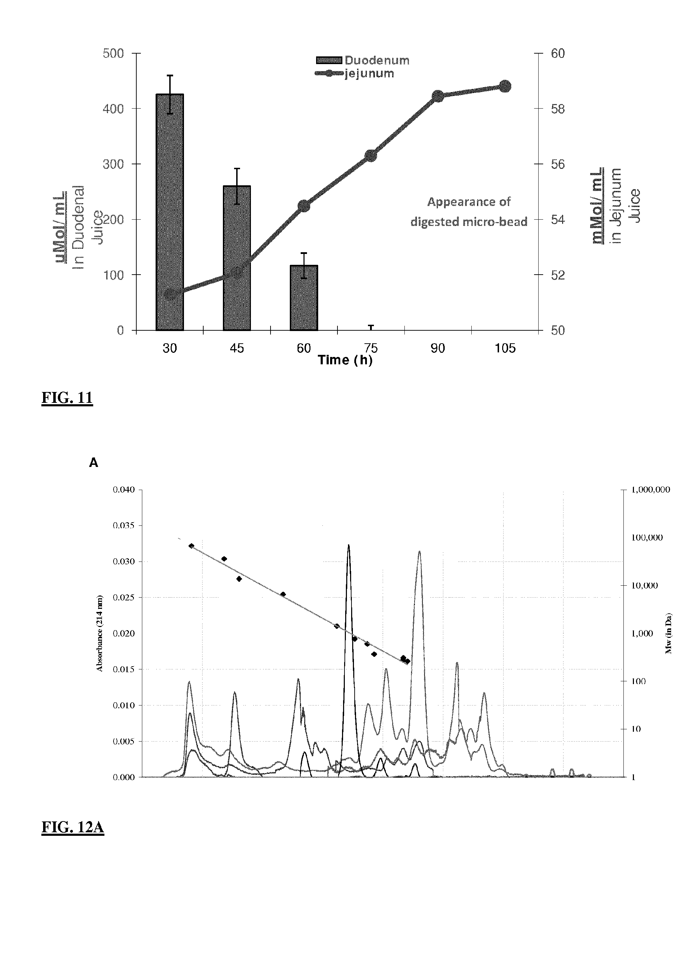

Following characterisation of the microbead for stomach resistance and intestinal digestion, a probiotic strain was encapsulated within pea protein micro-beads and cell survival was evaluated during i) the encapsulation process (Fig. 10); heat stress (Fig.11). Figure 10 illustrates the mild conditions utilised for encapsulation of probiotics in pea protein. Figure 11 illustrate the survival of probiotics in the presence of heat stress. This graph illustrates the heat protection provided by encapsulation (structure of a microbead), which is significantly higher than that provided by pea protein alone.

*Human data obtained for capsule delivery of native pea protein to the ileum Design of human study:*

Four participants were intubated with a 145cm nasoduodenal catheter
The catheter was introduced into the stomach and the tip was positioned in the intestine under radiological guidance and verification
Following overnight fasting, participants were instructed to consume the encapsulated prototype within 5 minutes (40mL volume + approx. 120 mL water)
During intra-duodenal infusion of drink, the fluid was infused for 10- 200 min
After 180 -220 min the naso-duodenal catheter was removed and subjects were allowed to eat *ad liteum* Position of the catheter is shown on the right
Table 2 below illustrates the position of the catheter in the intestine of the subject

TABLE 2

| Catheter ports | Centimeters from nose | Location |
| --- | --- | --- |
| 5 | 80 | Duodenum |
| 7 | 105 | Proximal Jejunum |
| 6 | 120 | Jejunum |
| 3 | 130 | Jejunum |
| 4 | 155 | Jejunum |
| 2 | 170 | Ileum |
| 1 | 185* | Ileum |
| *(port 1 is at -5cm, numbering on catheter from -10 till 255) | | |

*Results:*

- 10-35 minutes: Visualisation of intact micro-capsules in duodenum
- 10-55 minutes: No significant increase in the protein or peptide content in duodenal, jejunal or ileal regions
- 35-90 minutes: Detection of micro capsules break-down in jejunal regions
- 35- 120 minutes: Apparent increase in protein content in jejunal regions
- 90+ minutes: Spontaneous appearance of native pea protein in proximal jejunum & Ileum
- 90+ minutes: Accumulated presence of peptides in proximal jejunum & Ileum
- 180+ minutes: No appearance of native pea protein in proximal jejunum & Ileum

The invention is limited to the embodiments hereinbefore described which may be varied in construction and detail without departing from the spirit of the invention.

**Claims**

1. A method of producing a denatured pea protein solution comprising the steps of:

mixing pea protein with an alkali solvent to provide a 1-10% pea protein solution (w/v) having a pH of at least 10;
resting the pea protein solution for at least 15 minutes;
heating the pea protein solution under conditions sufficient to heat-denature the pea protein without causing gelation of the pea protein solution; and
rapidly cooling the denatured pea protein solution to prevent gelation;

wherein at least 90% (w/w) of the pea protein in the denatured pea protein solution is soluble.

2. A method as claimed in Claim 1 in which pea protein is mixed with an alkali solvent to provide an 6-9% pea protein solution (w/v) having a pH of at least 10.

3. A method as claimed in Claim 1 or 2 in which the pea protein is mixed with an alkali solvent to provide a pea protein solution having a pH of 10.5 to 11.

4. A method as claimed in any preceding Claim in which the cooled denatured pea protein solution is centrifuged to remove insoluble matter.

5. A method as claimed in any preceding Claim in which the pea protein solution is rested for at least 30 minutes.

6. A denatured pea protein solution comprising 1-10% denatured pea protein, an alkali solvent, the solution having a pH of at least 10, and in which at least 90% (w/w) of the pea protein in the denatured pea protein solution is soluble.

7. A denatured pea protein solution as claimed in Claim 6 and comprising 6-9% denatured pea protein (w/v).

8. A denatured pea protein solution as claimed in Claim 6 or 7, in which at least 95% (w/w) of the pea protein in the denatured pea protein solution is soluble.

9. A method of producing microbeads having a denatured pea protein matrix, the method comprising the steps of:

providing a denatured pea protein solution according to any of Claims 6 to 8 or
according to a method of any of Claims 1 to 5;
treating the denatured pea protein solution to form microdroplets; and
cross-linking and chelating the droplets to form microbeads.

10. A method as claimed in Claim 9 in which the step of cross-linking and chelating the microdroplets comprises immediately gelling the microdroplets in an acidic gelling bath having a pH that is less than the pI of the pea protein to form microbeads.

11. A method as claimed in Claim 9 or 10 in which the step of treating the denatured pea protein solution to form microdroplets comprises the step of extruding the solution through a nozzle assembly to form microdroplets.

12. A method as claimed in Claim 11 in which an active agent is added to the denatured pea protein solution prior to the microdroplet forming step, and optionally after the heating step, wherein the nozzle assembly comprises a single nozzle, and wherein the microbeads are microparticles having a continuous denatured pea protein matrix with active agent distributed throughout the denatured pea protein matrix.

13. A method as claimed in Claim 11 in which the nozzle assembly comprises an outer nozzle disposed concentrically around an inner nozzle, in which the denatured pea protein is extruded through the outer nozzle and an active agent solution comprising active agent is extruded through the inner nozzle, and wherein the microbeads are microcapsules having a denatured pea protein shell and a core comprising active agent.

14. A method as claimed in Claim 13 in which the nozzle assembly comprises an electrostatic voltage system configured to apply an electrical potential between the nozzle and an electrode disposed beneath the nozzle.

15. A method of producing spherical microbeads having a denatured pea protein matrix, the method comprising the steps of:

providing a 6-9% denatured pea protein solution (w/v) according to Claim 6, 7 or 8;
extruding the solution through a nozzle assembly to form microdroplets.; and
immediately gelling the microdroplets in an acidic gelling bath having a pH that is less than the pI of the pea protein to form spherical microbeads.

Pea Protein Microbeads    Pea Protein Microcapsules    Milk Protein Micro-beads

FIG. 1

A

B

**FIG. 2**

A

FIG. 3

**FIG. 4**

A                                    B                                    C

**FIG. 5**

**FIG. 6**

**FIG. 7**

**FIG. 8**

**FIG. 9**

**FIG. 10**

**FIG. 11**

A

**FIG. 12A**

FIG. 12B

**Bifidobacteria Efficiency of encapsulation**

AB008 Pea protein Encapsulation — 1.39E+07

AB008 Pea protein Suspension — 1.17E+07

AB008 17 h culture — 6.10E+08

FIG. 13

Europäisches
Patentamt

European
Patent Office

Office européen
des brevets

# EUROPEAN SEARCH REPORT

Application Number

EP 14 19 8051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KARLA J. KLEMMER ET AL: "Pea protein-based capsules for probiotic and prebiotic delivery", INTERNATIONAL JOURNAL OF FOOD SCIENCE AND TECHNOLOGY, vol. 46, no. 11, 1 September 2011 (2011-09-01), pages 2248-2256, XP055187943, ISSN: 0950-5423, DOI: 10.1111/j.1365-2621.2011.02743.x * page 2249, left-hand column, paragraph 2 * * page 2250, left-hand column, paragraph 1 * * page 2251, left-hand column, paragraph 3 * * figure 1 * | 1-15 | INV. A23J3/14 A23J3/26 A23L1/00 |
| X | US 2014/314944 A1 (DUVET SOPHIE [FR] ET AL) 23 October 2014 (2014-10-23) * examples 1, 2; table II * | 6,8 | |
| X | CHAVAN U ET AL: "Functional properties of protein isolates from beach pea (Lathyrus maritimus L.)", FOOD CHEMISTRY, ELSEVIER LTD, NL, vol. 74, no. 2, 1 August 2001 (2001-08-01), pages 177-187, XP027374861, ISSN: 0308-8146 [retrieved on 2001-08-01] * page 178, left-hand column, paragraph 2-3 * * page 181, right-hand column, paragraph 2 * * figure 4 * | 6,8 | TECHNICAL FIELDS SEARCHED (IPC) A23J A23L |

-/--

The present search report has been drawn up for all claims

| Place of search | Date of completion of the search | Examiner |
|---|---|---|
| Munich | 11 May 2015 | Stiegler, Petra |

EPO FORM 1503 03.82 (P04C01)

## EP 3 042 571 A1

**Europäisches Patentamt**
**European Patent Office**
**Office européen des brevets**

## EUROPEAN SEARCH REPORT

Application Number

EP 14 19 8051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIAELDIN M. RAGAB ET AL: "Fractionation, solubility and functional properties of cowpea (Vigna unguiculata) proteins as affected by pH and/or salt concentration", FOOD CHEMISTRY, vol. 84, no. 2, 1 February 2004 (2004-02-01), pages 207-212, XP055187914, ISSN: 0308-8146, DOI: 10.1016/S0308-8146(03)00203-6 * page 208, left-hand column, paragraph 2 - right-hand column, paragraph 2 * * figure 2 * | 6 | |
| A | PEREIRA H V R ET AL: "Legumes seeds protein isolates in the production of ascorbic acid microparticles", FOOD RESEARCH INTERNATIONAL, ELSEVIER APPLIED SCIENCE, BARKING, GB, vol. 42, no. 1, 1 January 2009 (2009-01-01), pages 115-121, XP025769654, ISSN: 0963-9969, DOI: 10.1016/J.FOODRES.2008.10.008 [retrieved on 2008-11-05] * page 116, left-hand column, paragraph 3 - right-hand column, paragraph 2 * | 1-15 | |

TECHNICAL FIELDS
SEARCHED (IPC)

The present search report has been drawn up for all claims

| Place of search | Date of completion of the search | Examiner |
|---|---|---|
| Munich | 11 May 2015 | Stiegler, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 14 19 8051

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2015

| Patent document cited in search report | Publication date | Patent family member(s) | Publication date |
|---|---|---|---|
| US 2014314944 A1 | 23-10-2014 | CN 103547167 A | 29-01-2014 |
| | | EP 2709465 A1 | 26-03-2014 |
| | | FR 2975259 A1 | 23-11-2012 |
| | | JP 2014513548 A | 05-06-2014 |
| | | KR 20140022889 A | 25-02-2014 |
| | | US 2014314944 A1 | 23-10-2014 |
| | | WO 2012156645 A1 | 22-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Hydrophobicity determined by fluorescence prose method and its correlation with surface properties of proteins. *Biochim Biophys Acta,* 24 July 1980, vol. 624 (1), 13-20

- **ADLER-NISSEN ; J. ADLER-NISSEN.** Determination of the degree of hydrolysis of food protein hydrolysates by trinitrobenzenesulfonic acid. *J. Agric. Food Chem.,* 1979, vol. 27 (6), 1256-1262
- **LAEMMLI U.K.** Cleavage of structural proteins during the assembly of the head of bacteriophage T4. *Nature,* 1970, vol. 227 (5259), 680-5